# EUROPEAN PATENT APPLICATION

(11) **EP 2 039 570 A2**
(43) Date of publication of application: **25.03.2009**
(21) Application number: 08164547.5
(22) Date of filing: 18.09.2008
(51) Int. Cl.: B60R 25/02, H01H 21/02

(54) **Start-up control device for electric vehicle**

(30) Priority: 21.09.2007 JP 2007244747
(71) Applicant: Fuji Jukogyo Kabushiki Kaisha, Tokyo 160-8316 (JP)
(72) Inventor: Ohtomo, Yosuke, Tokyo 160-8316 (JP)
(74) Representative: Vossius & Partner

(57) **Abstract**

The high voltage circuit is switched between a conductive state and a disconnected state by a main relay. When an electric vehicle start switch is operated by the driver, a signal from an accelerator pedal sensor is transmitted to a electric vehicle control unit (EVCU) serving as motor controlling means, and when an accelerator is operated after the high voltage circuit has been switched to the disconnected state by the main relay, a notification indicating that the drive motor is not drivable is issued to the driver through a speaker serving as vehicle condition notifying means.

## Description

The disclosure of Japanese Patent Application No. 2007-244747, filed on September 21, 2007 including the specification, drawings and abstract is incorporated herein by reference in its entirety.

The present invention relates to a start-up control device for an electric vehicle, with which a vehicle start-up operation can be performed smoothly by a driver of an electric vehicle that employs an electric motor as a drive source.

A driver starts an electric vehicle employing an electric motor as a drive source in a similar manner to an automobile having an internal combustion engine as a drive source, i.e. by operating a vehicle start switch corresponding to an ignition switch to a travel position, operating an operating lever corresponding to a shift lever to a travel mode, and then depressing an accelerator. When the operating lever has been operated to the travel mode, creep torque is transmitted to the vehicle by the electric motor, whereby the vehicle creeps forward.

In contrast to an electric vehicle, an automobile having an internal combustion engine includes a starter motor for starting the internal combustion engine, and this starter motor is driven when the driver operates a key cylinder constituting the ignition switch. When a key operation is performed to rotate the ignition switch by a single stage from an OFF position in which the key is inserted and removed, the ignition switch shifts to an accessory position, or in other words an ACC position. When the ignition switch is operated to the ACC position, power is supplied to a vehicle accessory , lighting devices, and air-conditioning devices, and as a result, these devices become operable. An operation to start the engine so as to cause the vehicle to advance is performed by turning the key to rotate the ignition switch from the ACC position through a second stage ON position, or in other words a travel position, to a third stage starting position, or in other words a START position. The starter motor for starting the engine is driven while the ignition switch is held in the START position by the key, and when the driver lets go of the key once the engine has started, a spring force returns the ignition switch to the ON position from the START position. Thereafter, the ignition switch is held in the ON position. While the vehicle is in motion, the ignition switch is fixed in the ON position and the engine is maintained in a driven state. Japanese Utility Model Application Publication S63-39069 describes this type of ignition switch.

Most automobiles having an internal combustion engine are provided with the ignition switch described above, and it has therefore become habitual for a driver to start the engine by rotating the ignition switch to the START position using a key, letting go of the key once the starter motor has been driven, and determining that the engine has started when s/he hears the sound of the engine. The driver then shifts to a vehicle start-up operation.

In recent years, electric vehicles have come to attention amid concerns about preventing atmospheric pollution and reducing vehicle noise. However, the operation described above, in which the engine of an automobile having an internal combustion engine is started by driving the starter motor using the ignition switch, is not necessary in an electric vehicle. Therefore, a start-up operation for an electric vehicle differs from that of an automobile having an internal combustion engine.

An electric vehicle includes a vehicle driving electric motor and a high voltage battery for supplying power thereto. A high voltage circuit for electrically connecting the electric motor to the high voltage battery is provided with a relay serving as a power source switch. The relay is operated to a closed position, in which a relay power line enters a power supply state such that the high voltage circuit is conductive, and an open position in which the relay power line is disconnected. When the relay is moved to the closed position, the high voltage circuit enters a drivable state in which the power of the high voltage battery is supplied to the electric motor, or in other words a power source system operation state, and when the relay is moved to the open position, the high voltage circuit enters a non-drivable state, or in other words a power source system stop state. The relay is operated by supplying a control signal thereto from a vehicle control unit. Thus, when a control signal is supplied to the relay while the relay power line is in the power supply state, the relay enters a closed state, and while the vehicle is in motion, the high voltage circuit is held in a conductive state.

Hence, by providing a vehicle start switch corresponding to the ignition switch of a conventional vehicle having an internal combustion engine with an ACC position, in which a power circuit of a low voltage system for supplying 12V power to the vehicle accessory is set in a conductive state, an ON position, in which the relay power line for supplying power to the relay is set in a power supply state, and a START position, or in other words a starting position, in which the relay is operated to a closed state in order to set a power source system of the high voltage circuit is set in an operative state, the vehicle start switch can be returned to the ON position while maintaining the power source system in the operative state by rotating the vehicle start switch to the starting position using a key and then letting go of the key. As a result, the driver can perform a start-up operation in an electric vehicle with an identical start-up sensation to that of a vehicle having an internal combustion engine.

In an automobile having an internal combustion engine, the driver is able to recognize that the engine has entered an idling state by the sound of the engine when the starter motor is activated using the key. However, when the vehicle start switch of an electric vehicle is provided with a starting position for operating the relay to the closed state by means of a key operation performed by the driver, the driver is unable to tell from the sound of the vehicle whether the high voltage circuit is in a system operation state, i.e. a conductive state, or a disconnected state simply by turning the key to the starting position.

Hence, when the driver performs a start-up operation by operating the vehicle start switch using the key, it is difficult to determine whether or not relay of the high voltage circuit has been switched ON such that the power source system is in an operative state, or in other words a conductive state, and therefore the driver may perform a vehicle start-up operation even though the vehicle is not in a drivable state, i.e. the relay is OFF and the high voltage circuit is disconnected. In this case, the driver may determine mistakenly that the vehicle has broken down. To solve this problem, a display portion that is illuminated to indicate that the relay is ON and the vehicle is drivable may be provided on an instrument panel, but since various other information, such as the vehicle speed and the remaining capacity of the battery, is also displayed on the instrument panel, it is difficult to differentiate between the various displays.

An object of the present invention is to enable a driver to perform a start-up operation smoothly, without mistakenly determining a system irregularity, when the driver operates a vehicle start switch of an electric vehicle.

In a start-up control device for an electric vehicle according to the present invention, the electric vehicle includes a drive motor for driving a vehicle, a high voltage storage device for supplying power to the drive motor, and a power source switch that is provided on a high voltage circuit for connecting the high voltage storage device to the drive motor and switches the high voltage circuit between a conductive state and a disconnected state, and the start-up control device includes: motor controlling means for outputting an output torque signal to the drive motor when an accelerator is operated after the high voltage circuit has been switched to the conductive state by a vehicle start switch; and vehicle condition notifying means for issuing a notification indicating that the drive motor is not drivable when a travel operation is performed after the high voltage circuit has been switched to the disconnected state.

In the start-up control device for an electric vehicle according to the present invention, the notification indicating that the drive motor is not drivable is issued when an operating lever is operated to a vehicle travel mode or when the accelerator is operated after the operating lever has been operated to the vehicle travel mode.

In the start-up control device for an electric vehicle according to the present invention, the vehicle condition notifying means is a speaker that issues the notification indicating that the drive motor is not drivable to a driver by voice.

In the start-up control device for an electric vehicle according to the present invention, the vehicle start switch is operated manually by the driver to an ACC position in which power is supplied to vehicle accessory such as an audio device, a travel position in which power is supplied to the vehicle accessory and power can be supplied to the power source switch, and a starting position in which the power source switch is activated such that the high voltage circuit is set in the conductive state, and the vehicle start switch returns to the travel position when the manual operation by the driver is halted.

According to the present invention, the driver is notified that the drive motor is not drivable when a vehicle travel operation is performed after the high voltage circuit of the electric vehicle has been disconnected by the power source switch, and therefore the driver can determine that the drive motor is not in a drivable state. As a result, situations in which the driver mistakenly determines a system irregularity can be prevented.

Whether or not a vehicle travel operation has been performed is determined according to whether or not the operating lever has been operated to the vehicle travel mode, or whether or not the operating lever has been operated to the vehicle travel mode and the accelerator pedal has been operated. Release of a parking brake may be employed as a prerequisite of these travel operations.

By employing a speaker as the notifying means, the driver can determine that the drive motor is not in a drivable state by voice, rather than looking at a display on an instrument panel.

By providing the vehicle start switch with the ACC position, the travel position, and the starting position, the electric vehicle can be started with a similar start-up sensation to that of an automobile having an internal combustion engine.

An embodiment of the present invention will be described in detail below on the basis of the drawings.

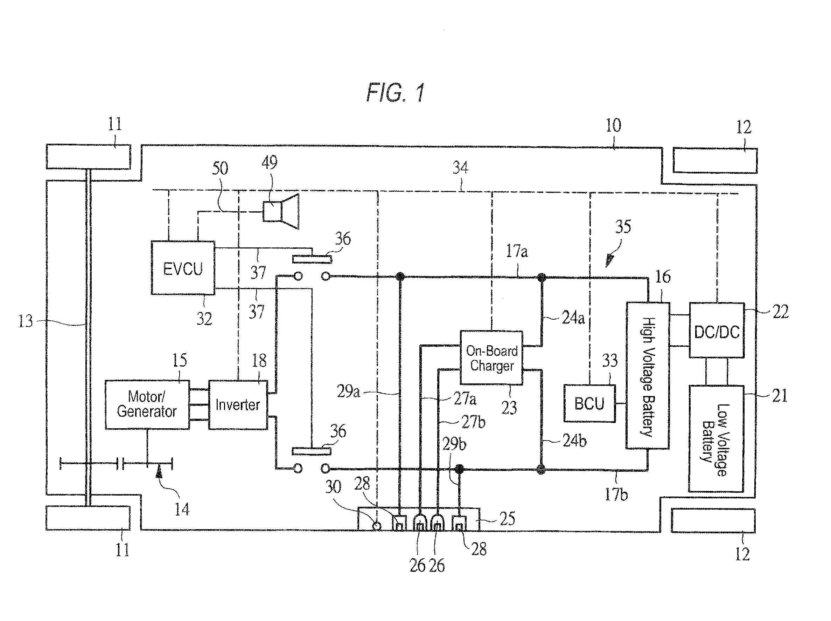

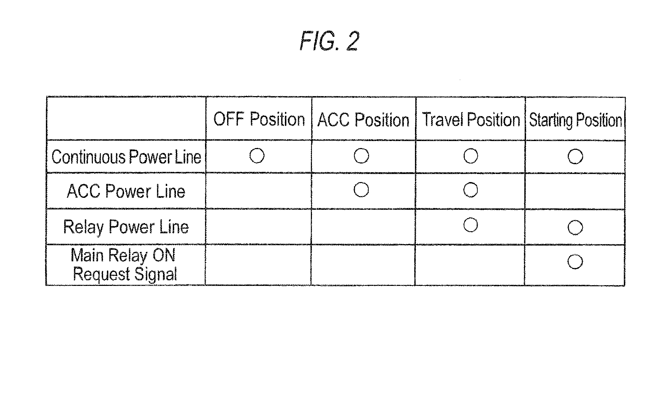

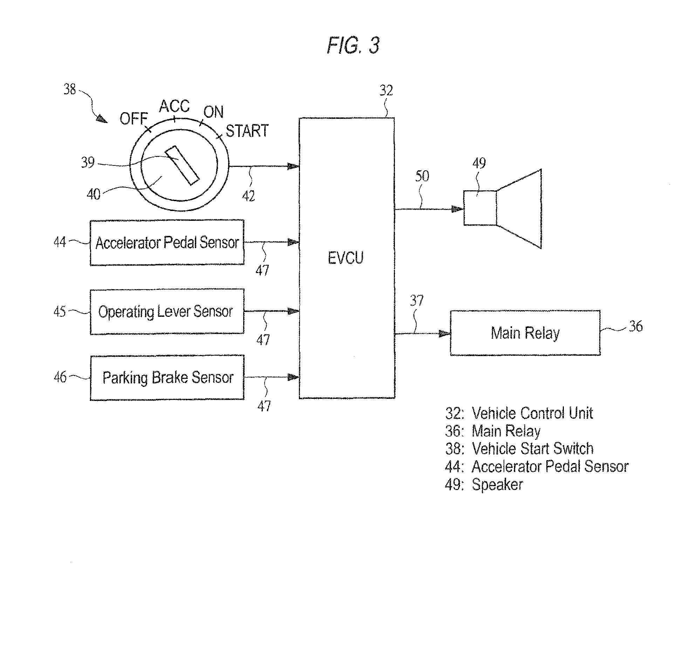

Fig. 1 is a schematic diagram showing an electric vehicle having a start-up control device serving as an embodiment of the present invention; Fig. 2 is an operation table showing relationships between various positions of a vehicle start switch and a power supply state relative to various operation devices; and Fig. 3 is a block diagram showing a start-up control circuit.

Fig. 1 is a schematic diagram showing an electric vehicle having a start-up control device serving as an embodiment of the present invention.

A vehicle body 10 of an electric vehicle has drive wheel-side front wheels 11 and driven wheel-side rear wheels 12, and a motor/generator 15 is connected to a drive shaft 13 for driving the front wheels 11 via a gear pair 14 having a fixed gear ratio. The motor/generator 15, which serves as an electric motor for driving the vehicle, is a three-phase alternating current type synchronous motor, and a high voltage battery 16 for supplying power thereto is installed in the vehicle body 10 as a high voltage storage device. The high voltage battery 16 employs a lithium ion battery, i.e. a secondary battery, and outputs 400V of direct current power, for example.

The high voltage battery 16 is connected to an inverter 18 via power supply cables 17a, 17b. The inverter 18 converts the direct current from the high voltage battery 16 into a three-phase alternating current and supplies power to the motor/generator 15. The motor/generator 15 has a function for recovering regenerative energy by generating power when the vehicle brakes and charging this power to the high voltage battery 16. A low voltage battery 21 is installed in the vehicle body 10 to supply 12V of direct current power, for example, to low voltage devices installed in the vehicle such as an audio device and an air-conditioning fan. The low voltage battery 21 is charged by reducing the voltage of the high voltage battery 16 using a DC/DC converter 22.

An on-board charger 23 is installed in the vehicle body 10 to charge the high voltage battery 16 from an external power source such as a commercial power source, and output terminals of the on-board charger 23 are connected to the high voltage battery 16 by output cables 24a, 24b via the power supply cables 17a, 17b. The on-board charger 23 is connected to connection terminals 26 of a connector 25 provided on one side face of a rear portion side of the vehicle body 10 by power supply cables 27a, 27b. When power source terminals of a power source plug, not shown in the drawing, which is connected to the external power source, or in other words a normal charging power source, are connected to the connection terminals 26 of the connector 25, the on-board charger 23 charges the high voltage battery 16 by boosting anAC 100V orAC 200V external power source voltage, for example, and converting the voltage into a 400V direct current, for example.

The connector 25 includes connection terminals 28 in addition to the connection terminals 26, and the connection terminals 28 are connected to the high voltage battery 16 by power supply cables 29a, 29b via the power supply cables 17a, 17b. When power supply terminals of a power supply plug, not shown in the drawing, which is connected to a fast charger, are connected to the connection terminals 28 of the connector 25, the high voltage battery 16 is charged with a 400V direct current, for example, from the fast charger. Note that when the power supply terminals of the power supply plug are connected to the connection terminals 28 of the connector 25, a signal terminal provided on the power supply plug is connected to a signal terminal 30 provided on the connector 25 such that information can be exchanged between the fast charger and the connector 25. An aggregate connector 25 including both the connection terminals 26 and the connection terminals 28 was described here as the connector. However, a connector having the connection terminals 26 may be provided on the front of the vehicle body 10 and a connector having the connection terminals 28 may be provided on one side face on the rear portion side of the vehicle body 10, for example.

A vehicle control unit (EVCU) 32 serving as motor controlling means for outputting an output torque signal to the motor/generator 15 via the inverter 18 when an accelerator is operated is installed in the vehicle body 10, and a battery control unit (BCU) 33 for processing information such as the voltage and remaining capacity of the high voltage battery 16 is connected to the high voltage battery 16. The vehicle control unit 32, the battery control unit 33, the on-board charger 23, the signal terminal 30 of the connector 25, the inverter 18, and the DC/DC converter 22 are connected by a communication network 34, or in other words a CAN (car area network) so as to be capable of exchanging information. The vehicle control unit 32 and battery control unit 33 include a CPU for calculating control signals, ROM for storing a control program, calculation formulae, map data, and so on, and RAM for storing data temporarily.

A circuit portion that connects the high voltage battery 16 to the motor/generator 15 via the power supply cables 17a, 17b and the inverter 18 constitutes a high voltage circuit 35 for supplying vehicle driving power from the high voltage battery 16 to the motor/generator 15. The power supply cables 17a, 17b are each provided with a main relay 36 serving as a power source switch for switching the high voltage circuit 35 between a conductive state and a disconnected state. When the main relay 36 is set in a closed position, the high voltage circuit 35 enters the conductive state, and when the main relay 36 is set in an open position, the high voltage circuit 35 enters the disconnected state. Power from a relay power line, not shown in the drawing, is supplied to the main relay 36, and a switching operation is performed on the main relay 36 in accordance with a control signal supplied from the vehicle control unit 32 via a control cable 37. When a control signal is transmitted from the vehicle control unit 32 such that power from the low voltage battery 21 is supplied to a solenoid of the main relay 36, the main relay 36 is switched to the closed position, in which the high voltage circuit 35 enters the conductive state, and as a result, the motor/generator 15 enters a drivable state, or in other words a system operation state. When the control signal from the vehicle control unit 32 is halted, on the other hand, the main relay 36 is switched to the open position, in which the high voltage circuit 35 enters the disconnected state, and as a result, power supply to the motor/generator 15 is halted.

Fig. 2 is an operation table showing relationships between various positions of a vehicle start switch and a power supply state relative to various operation devices, and Fig. 3 is a block diagram showing a start-up control circuit.

A vehicle start switch 38 provided in the vehicle body 10 of the electric vehicle includes a key cylinder 40 having an insertion port 39 into which a key is inserted, similarly to an ignition switch disposed in an automobile having an internal combustion engine, and when a key is inserted into the insertion port 39 from an OFF position, in which the key is inserted and removed by a driver, the vehicle start switch 38 can be rotated freely in three stages. Thus, the driver can perform start-up preparation with an identical sensation to the sensation obtained when an automobile having an internal combustion engine is started.

As shown in Fig. 3, when the vehicle start switch 38 is in the OFF position, a continuous power line is ON and continuous power is supplied to continuous operating devices that require a power supply from the low voltage battery 21. Continuous operating devices that receive a continuous power supply include a keyless entry system installed in a door of the vehicle body 10. The keyless entry system includes a signal receiver that activates a door lock upon reception of infrared rays or radio waves, and the signal receiver receives a constant supply of power so as to be operable at all times, regardless of whether or not the key is inserted in the insertion port 39.

When the key is inserted into the insertion port 39 of the vehicle start switch 38 and the driver performs a key operation to rotate the vehicle start switch 38 by a single stage from the OFF position to an accessory position, or in other words an ACC position, a voltage from the low voltage battery 21 is supplied to an ACC power line in addition to the continuous power line. The ACC power line is connected to vehicle accessory installed in the vehicle body 10 such as audio devices and air conditioning fans, and when the driver rotates the vehicle start switch 38 to the ACC position, the vehicle accessory and so on become operable.

When the vehicle start switch 38 is rotated to a second stage ON position, or in other words a travel position, power from the low voltage battery 21 is supplied to a relay power line in addition the continuous power line and the ACC power line. When power is supplied to the relay power line such that the relay power line enters an ON state, power from the low voltage battery 21 can be supplied to the main relay 36.

When the vehicle start switch 38 is rotated to a third stage START position, or in other words a starting position, a main relay ON request signal serving as a control signal is supplied to the two main relays 36 from the vehicle control unit 32 for as long as the vehicle start switch 38 is held in the starting position. Accordingly, power from the relay power line is supplied to the solenoids of the main relays 36, whereby the main relays 36 are switched to the closed position in which the high voltage circuit 35 enters the conductive state, and as a result, the motor/generator 15 becomes drivable via the inverter 18. To ensure that the high voltage circuit 35 enters the conductive state, the main relay ON request signal must be output to the respective main relays 36 for a predetermined time period, and therefore, if the vehicle start switch 38 is not held in the starting position for the predetermined time period during the key operation of the driver, the high voltage circuit 35 does not enter the conductive state.

A spring force is applied to the vehicle start switch 38 by a return spring in a direction for returning the vehicle start switch 38 to the travel position from the starting position, and when a manual operation by the driver is halted after the vehicle start switch 38 has been rotated to the startingposition, the vehicle start switch 38 is returned to the travel position by the spring force of the return spring. The main relay ON request signal continues to be transmitted to the main relays 36 after the high voltage circuit 35 has entered the conductive state and the vehicle start switch 38 has been returned to the travel position from the starting position by the spring force, even though the vehicle start switch 38 is in the travel position, and while the vehicle is in motion, the vehicle start switch 38 is fixed in the travel position such that the motor/generator 15 is maintained in the drivable state. Thus, the vehicle start switch 38 of the electric vehicle is returned to the travel position from the starting position in a similar manner to the ignition switch of an automobile having an internal combustion engine, and therefore a start-up operation of the electric vehicle can be performed with an identical start-up sensation to that of an automobile having an internal combustion engine.

The vehicle body 10 is provided with an accelerator pedal sensor 44 for detecting an accelerator operation performed by the driver, an operating lever sensor 45 for detecting an operation of the operating lever, and a parking brake sensor 46 for detecting an operation of a side brake, or in other words a parking brake. As shown in Fig. 3, these sensors are connected to the vehicle control unit 32 by signal cables 47. Hence, when the operating lever is operated to a vehicle travel mode, the parking brake is released, and the accelerator is operated while the main relays 36 are switched to the closed position in which the high voltage circuit 35 enters the conductive state, a control signal is transmitted from the vehicle control unit 32 to the inverter 18 in accordance with signals from the respective sensors 44 to 46, whereby the vehicle is started and caused to travel. Thus, when a travel operation is performed with the high voltage circuit 35 set in the conductive state in accordance with the vehicle start switch 38, an output torque signal is output from the vehicle control unit 32 to the motor/generator 15 serving as a drive motor via the inverter 18.

As described above, when the vehicle start switch 38 is rotated to the starting position, the main relays 36 are operated to the closedposition in which the high voltage circuit 35 enters the conductive state, but in order to operate the two main relays 36 such that the high voltage circuit 35 enters the conductive state, the vehicle start switch 38 must be held in the starting position for a predetermined amount of time. Accordingly, if the key operation is halted before the two main relays 36 are securely set in the closed position, the high voltage circuit 35 does not enter the conductive state, and the vehicle start switch 38 is returned to the travel position from the starting position by the spring force of the return spring even though the high voltage circuit 35 is in the disconnected state.

In an automobile having an internal combustion engine, it is easy to recognize that the engine has been activated by an operation of the ignition switch from the sound of the engine, whereas in the electric vehicle having the vehicle start switch 38 described above, the driver cannot determine whether or not the motor/generator 15 is drivable from the sound of the vehicle and so on even after turning the key to the starting position such that the high voltage circuit 35 enters the conductive state. Therefore, a speaker 49 is provided on the instrument panel or the like of the vehicle as vehicle condition notifying means for issuing a voice notification indicating that the motor/generator 15 is not drivable when a travel operation is performed using the operating lever while the main relays 36 are switched to the open position in which the high voltage circuit 35 is disconnected, and the speaker 49 is connected to the vehicle control unit 32 by an output cable 50. Note that instead of the speaker 49, a display that lights up and displays alphabetic characters or the like may be employed as the vehicle condition notifying means.

In addition to a case in which the operating lever is switched to the travel mode while the main relays 36 are switched to the open position in which the high voltage circuit 35 is disconnected, a case in which the accelerator pedal is operated maybe used as a condition for issuing the notification indicating that the motor/generator 15 is not drivable. When the operating lever is operated to the travel mode, the motor/generator 15 is driven to transmit creep torque to the vehicle, and according to the former case, voice notification indicating that the motor/generator 15 is not drivable is issued when the operating lever is switched to the travel mode while the high voltage circuit 35 is disconnected. According to the latter case, voice notification indicating that the motor/generator 15 is not drivable is issued when the accelerator pedal is operated after the operating lever has been operated to the travel mode. In both cases, release of the parking brake is preferably employed as a prerequisite, but notification indicating that the motor/generator 15 is not drivable may be issued when the aforementioned operations are performed while the parking brake is in a braked state.

Hence, when the high voltage circuit 35 is not in the conductive state, notification indicating that the vehicle cannot be driven is issued to the driver, and therefore, when the driver performs a vehicle driving operation but the vehicle does not start, the driver can be encouraged to re-operate the vehicle start switch 38 without determining mistakenly that the vehicle has broken down.

Next, a start-up preparation operation of the electric vehicle having the start-up control device according to the present invention will be described. To set the motor/generator 15 in the drivable state, or in other words to prepare for start-up of the electric vehicle, the main relays 36 must be switched to the closed position so that the high voltage circuit 35 enters the conductive state. For this purpose, the driver inserts a key into the vehicle start switch 38 and rotates the vehicle start switch 38 to the travel position, thereby setting up a state in which a voltage from the low voltage battery 21 can be supplied to the relay power line. When the vehicle start switch 38 is rotated to the starting position from the travel position by a key operation of the driver, the main relay ON request signal is transmitted from the vehicle control unit 32 to the main relays 36.

When the main relay ON request signal has been transmitted such that power is supplied to the solenoids provided in the main relays 36 from the low voltage battery 21, the main relays 36 are switched to the closed position in which the high voltage circuit 35 enters the conductive state. To complete the switching operation of the main relays 36, the vehicle start switch 38 must be held in the starting position for a predetermined amount of time, and when the manual operation is stopped with the vehicle start switch 38 rotated to the starting position, the vehicle start switch 38 is returned to the travel position by the return spring. Note that when the vehicle start switch 38 is operated to the starting position, power supply to the ACC power line is halted, and thus the driver can perform a start-up operation with a similar start-up sensation to that of an automobile having an internal combustion engine.

During the start-up preparation process, when the vehicle start switch 38 is not rotated to the starting position or the vehicle start switch 38 is rotated to the starting position but returned to the travel position before the switching operation of the main relays 36 is complete, for example, the high voltage circuit 35 becomes disconnected and the motor/generator 15 cannot be driven. When the operating lever is operated to the travel mode in this state, voice notification indicating that the motor/generator 15 is not drivable is issued to the driver through the speaker 49 in the form of a message such as "The system is not activated", for example, and thus the driver is encouraged to rotate the vehicle start switch 38. Hence, even when the switching operation of the main relays 36 is incomplete such that the vehicle does not start in accordance with an operating lever operation or an accelerator operation, the driver can perform the start-up preparation operation smoothly, without mistakenly determining a system irregularity.

The present invention is not limited to the embodiment described above, and may be subjected to various modifications within a scope that does not depart from the spirit thereof. For example, the vehicle start switch 38 is rotated by inserting a key into the insertion port 39 of the key cylinder 40, but the vehicle start switch 38 may be provided with a grip portion such that the vehicle start switch 38 is rotated using the grip portion rather than the key. Further, in the illustrated electric vehicle, the front wheels 11 serve as the drive wheels, but the rear wheels 12 maybe used as the drive wheels. Moreover, a lithium ion battery is used as the high voltage battery 16, but another type of secondary battery, for example an electrochemical capacitor such as an electric double layer capacitor, may be used instead.

## Claims

1. A start-up control device for an electric vehicle having a drive motor for driving said electronic vehicle, a high voltage storage device for supplying power to said drive motor, and a power source switch that is provided on a high voltage circuit for connecting said high voltage storage device to said drive motor and switches said high voltage circuit between a conductive state and a disconnected state, said start-up control device comprising:
motor controlling means for outputting an output torque signal to said drive motor when an accelerator is operated after said high voltage circuit has been switched to said conductive state by a vehicle start switch; and
vehicle condition notifying means for issuing a notification indicating that said drive motor is not drivable when a travel operation is performed after said high voltage circuit has been switched to said disconnected state.

2. The start-up control device for an electric vehicle according to claim 1, wherein said notification indicating that said drive motor is not drivable is issued when an operating lever is operated to a vehicle travel mode or when said accelerator is operated after said operating lever has been operated to said vehicle travel mode.

3. The start-up control device for an electric vehicle according to claim 1 or 2, wherein said vehicle condition notifying means is a speaker that issues said notification indicating that said drive motor is not drivable to a driver by voice.

4. The start-up control device for an electric vehicle according to any one of claims 1 to 3, wherein said vehicle start switch is operated manually by said driver to an ACC position in which power is supplied to a vehicle accessory, a travel position in which power is supplied to said vehicle accessory and power can be supplied to said power source switch, and a starting position in which said power source switch is activated such that said high voltage circuit is set in said conductive state, and said vehicle start switch returns to said travel position when said manual operation by said driver is halted.
